# EUROPEAN PATENT SPECIFICATION

(11) **EP 1 503 115 B1**
(45) Date of publication and mention of the grant of the patent: **16.03.2011**
(21) Application number: 04018039.0
(22) Date of filing: 29.07.2004
(51) Int. Cl.: F16J 3/04, F16D 3/84

(54) **Boot structure fitting for mechanical joint**
Befestigung für einen Faltenbalg.
Fixation d'un soufflet de protection

(30) Priority: 01.08.2003 JP 2003284775
(43) Date of publication of application: 02.02.2005
(73) Proprietor: JTEKT CORPORATION, Chuo-ku, Osaka (JP)
(72) Inventor: Kashiwagi, Isashi, Chuo-ku, Osaka (JP); Yoshida, Masahiro, Chuo-ku, Osaka (JP)
(74) Representative: TBK-Patent

(56) References cited:
- US-A- 5 672 113
- US-A- 5 725 433

## Description

### BACKGROUND OF THE INVENTION

### 1.Field of the Invention:

The present invention relates to a boot structure fitting according to the preamble of claim 1 between an axial component for mechanical joint comprising boot protecting from wrong environments.

### 2. Description of the Related Art:

In a prior art of structure fitting between a boot and an axial component, the boot has an annular lip on an inner surface of a fitting portion. The annular lip is formed toward an inside of the inner surface of the fitting portion. Then the boot is tightly fitted into the axial component and clamped by clamping means from outside of the boot.

However, it is difficult to assemble the boot in inserting the axial component into the boot due to the annular lip projected from the inner surface of the fitting portion to center axis of the boot, because the annular lip interferes with the axial component. Also, it is considerable that the annular lip is damaged by an edge of the axial component. By these issues, the top end of the annular lip is necessary to be large radius. In order to increase seal performance, it would be better to use the annular lip with small radius top end. However, the small radius top end of the annular lip is easy to be damaged by the edge of the axial component when the axial component is inserted into the boot.

According to the prior art disclosed in reference US 5 725 433 A, a boot structure fitting for a mechanical joint is known. This boot structure fitting comprises a boot made of flexible material and clamping means for clamping said boot to axial components of the mechanical joint. The boot structure fitting comprises annular protuberance means between said boot and said clamping means.

According to the prior art disclosed in US 5 672 113 A, a boot fixing portion has an annular convex portion integrally formed on the outer periphery thereof and an annular projection integrally formed on the inner periphery thereof in opposed relation to the convex portion. The annular projection is adapted to engage an engaging groove formed in the outer periphery of the outer member of a constant velocity joint.

It is the object of the present invention to provide a combination of a boot and an axial component for a mechanical joint providing an improved assembly during inserting the axial component to the boot.

The object is solved by a combination having the features of claim 1. Further advantageous developments of the present invention are defined in the dependent claims.

The boot structure fitting into the axial component according to the present invention mainly comprises a pair of annular grooves, an annular lip, clamping means clamping from outside of the boot and annular protuberance means between the boot and the clamping means. The annular lip is formed between said pair of annular grooves on inner surface of the fitting portion so that the top end of the annular lip is not projected from the inner surface of the boot fitting to the centerline of the boot. Clamping force from clamping means is exerted in concentration through the annular protuberance to the annular lip and the annular lip is elastically deformed and is pushed to outer surface of the axial component. By these constructions, the axial component can be inserted easily into the boot, because there is no interference between the annual lip and the axial component.

The second aspect of the present invention is that an annual protuberance is formed on outer surface of the boot or inner surface of the clamping means to exert clamping force from clamping means in concentrate to the annular lip.

The third aspect of the present invention is that the annular lip has small radius top end for stable sealing between the boot and the axial component.

The fourth aspect of the present invention is that the axial component equips an outer groove on the outer surface of the axial component. When the boot is clamped by the clamping means to the axial component, the annular lip is elastically deformed and fallen into the outer groove of the axial component to prevent boot from coming off from the axial component.

### BRIEF DESCRIPTION OF THE DRAWING FIGURES

FIG. 1 illustrates an assembly of a constant velocity joint for an automobile with a partially sectional view.
FIG. 2 (A) is a sectional view of a boot structure fitting for the constant velocity joint of the first embodiment of the present invention with outer annular groove on the axial component.
FIG. 2 (B) illustrates a status of assembly of the boot structure of the first embodiment of the present invention with clamping means.
FIG. 3 is a sectional view of the boot structure of a comparative example for explaining present invention with another clamping means.
FIG. 4 illustrates an assembly of power steering apparatus for an automobile with a partially sectional view.
FIG. 5 (A) is a sectional view of a boot structure of the power steering apparatus of the second embodiment of the present invention.
FIG. 5 (B) illustrates a status of assembly of the boot illustrated in FIG. 5 (A), an axial component and clamping means.

### DESCRIPTION OF THE PREFERRED EMBODIMENT

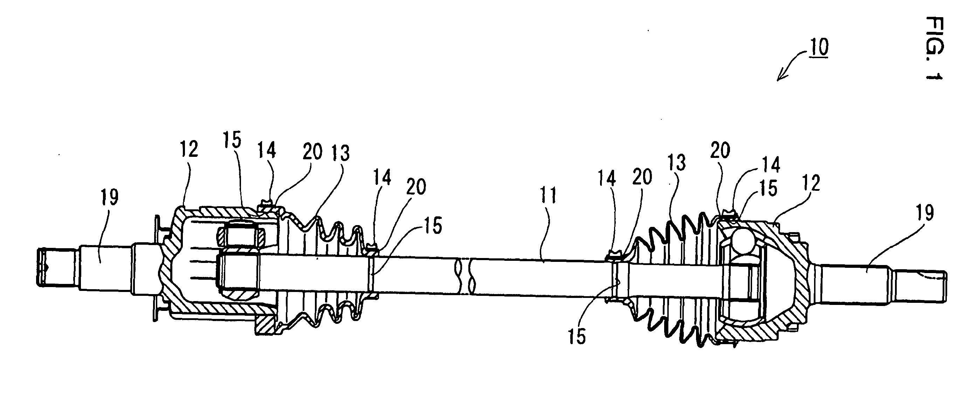

FIG. 1 illustrates assembly status of a constant velocity joint 10 that transmits output torque from an engine to driven right and left wheels (not shown). The constant velocity joint is respectively located at right and left direction of a vehicle. A tie rod 19 is respectively connected to each end of driving shafts 11 of constant velocity joints. Each tie rod 19 has an outer body being a cylindrical shape, and the driving shaft 11 is inserted into an inlet of the outer housing 12. In order to protect from outside dust, a boot 13 is fitted to the opening of the outer housing 12. The driving shafts 11 and the outer housing 12 construct an axial component of the constant velocity joint.

The boot 13 is made of flexible materials like rubber or synthetic resin and is formed by molding technique. Both ends of the boot 13 have a cylindrical opening and there is a bellows portion between the ends of the boot 13.

One end of the boot 13 is tightly fitted with the outer housing 12 of the tie rod, the other end of the boot 13 is tightly fitted with the driving shaft 11. Both ends of boot 13 are clamped by clamping means 14 from outside of the boot 13 respectively.

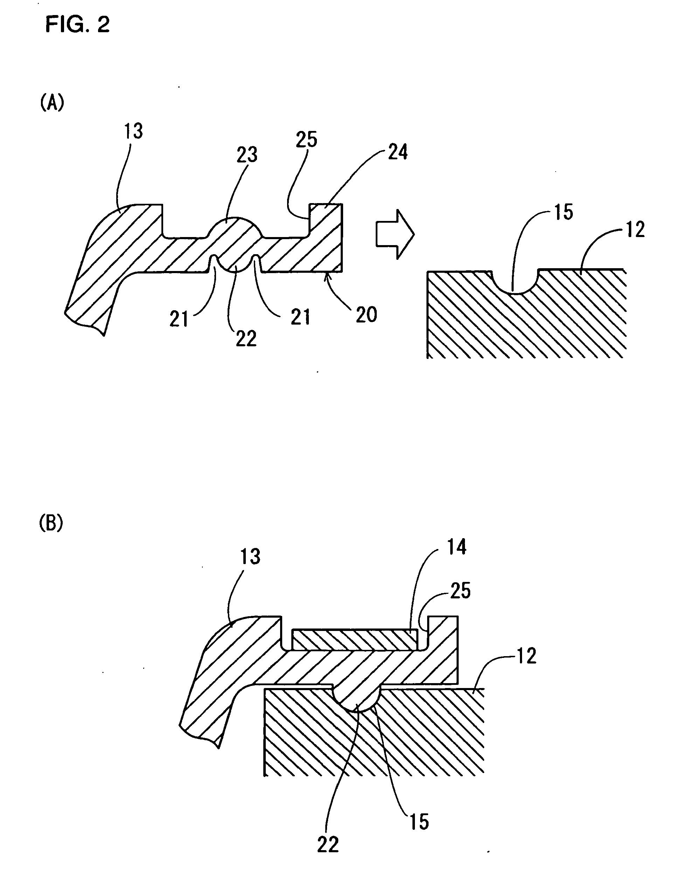

FIG. 2 (A) and FIG. 2 (B) illustrate first embodiment of the present invention. FIG. 2 (A) shows detail construction of the boot 13 and a fitting portion of the outer housing 12. There are a pair of annular grooves 21, 21 and an annular lip 22 between the annular grooves 21, 21 on inner surface 20 of the fitting portion of the boot 13. The annular lip 22 is formed so that the top end of the lip is not projected from the inner surface 20 to centerline of the boot. Also, the annular lip 22 is formed so that the annular lip equips small radius top end. An annular protuberance 23 is formed on opposite side of the annular lip 22 on outer surface of the boot 13. Therefore, the outer housing 12 can be inserted into the boot 13 without interference between the annular lip 22 and the edge of the outer housing 12. The outer housing 12 equips a circumferential groove 15 on outer surface of the outer housing 12 and the outer groove 15 is located at corresponding position to the annular lip 22 of the boot 13 longitudinally after the boot 13 is assembled to the outer housing 12.

FIG. 2 (B) illustrates clamping status of the boot 13 and the outer housing 12 by clamping means 14 in first embodiment. After the boot 13 is fitted into the outer housing 12, the boot 13 is clamped by the clamping means 14, at this time, the annular lip 22 is elastically deformed through the annular protuberance 23 and the annular lip 22 is fallen into the outer annular groove 15 of the outer housing 12 by which a clamping force from the clamping means is exerted in concentration to the annular lip 22. The annular lip 22 that is elastically deformed and fallen into the outer groove 15 enables to prevent the boot 13 from coming off from the outer housing 12 and to provide sealing performance between the boot 13 and the outer housing 12.

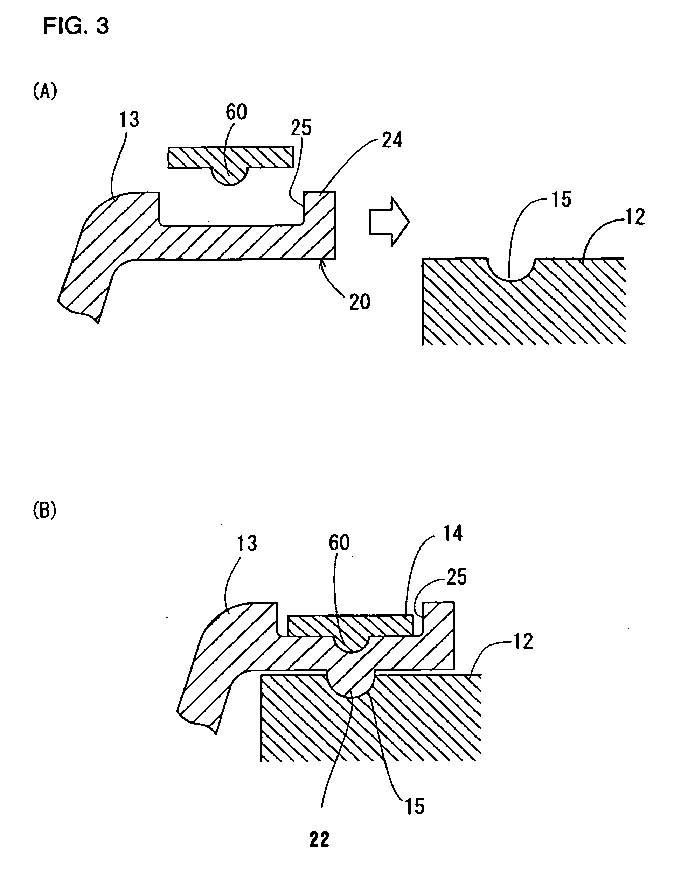

FIG. 3 illustrates clamping status of the boot 13 and the outer housing 12 by clamping means 14 after the boot 13 is fitted into the outer housing 12 and clamped by the clamping means 14 as comparative example which is next part of the invention. The clamping means 14 equips an annular protuberance 60 on inner surface of the clamping means 14 instead of the annular protuberance 23 on outer surface of the boot 13 illustrated in FIG. 2 (A). Clamping force from the clamping means 14 is exerted in concentration through the annular protuberance 60 on inner surface of the clamping means 14 to the annual lip 22 and the annular lip 22 is elastically deformed and pushed to outer surface of the outer housing 12.

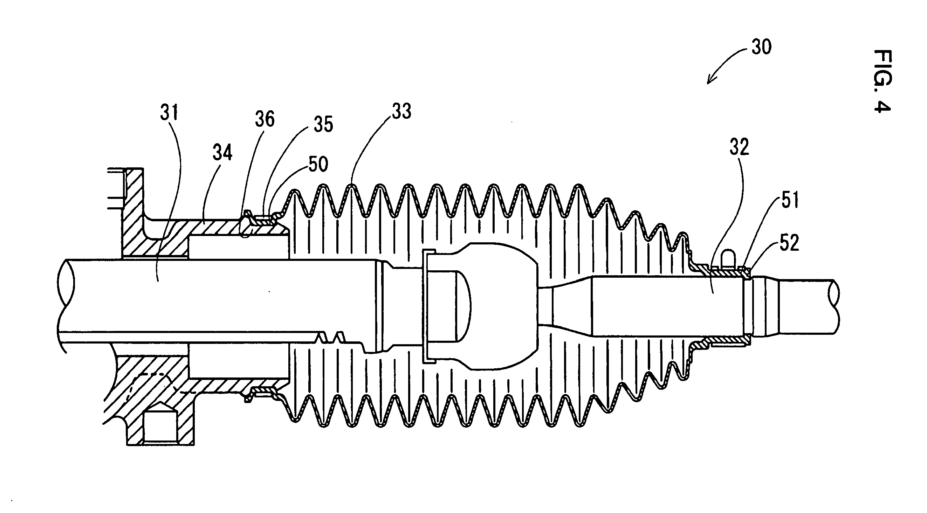

FIG. 4 illustrates assembly status of a power steering apparatus 30, rack and pinion type. The power steering apparatus 30 locates in right and left direction of a vehicle and is tied with each of tie rods 32 on both ends of the power steering apparatus 30 respectively. In longitudinal direction, center portion of a rack gear 31 is covered by a rack gear case 34, and both ends of the rack gear 31 protrude from the rack gear case 34. Both ends of the rack gear 31 are connected to one end of tie rods 32 respectively, and other end of the tie rods 32 is connected to a steered wheel (not shown). In order to protect from outside dust and seal up an opening of the rack gear case 34, a boot 33 is fitted between the rack gear case 34 and the tie rod 32. The rack gear case 34 and the tie rod 32 construct the axial component of the power steering apparatus. The boot 33 is made of flexible materials like rubber or synthetic resin and is formed by molding technique. Both ends of the boot 33 equip a cylindrical opening respectively and there is a bellows portion between the ends of the boot 33. One end of the boot 33 is tightly fitted with the rack gear case 34, the other end of the boot 33 is tightly fitted with the tie rod 32. Both ends of the boot 33 are clamped by clamping means 35 from outside of the boot 33 respectively.

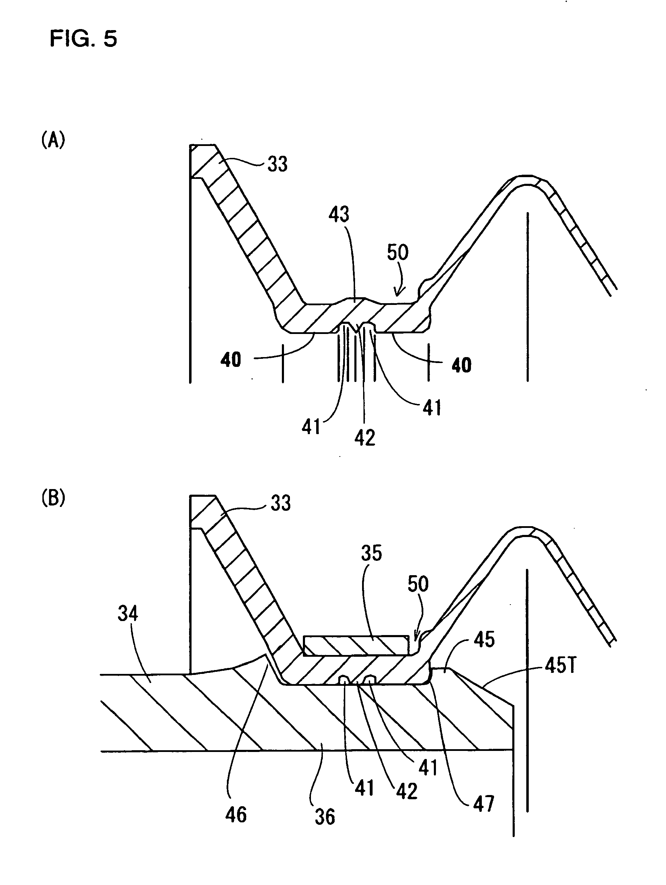

FIG. 5 (A) and FIG. 5 (B) illustrate a second embodiment of that present invention which is applied to a power steering apparatus, rack and pinion type.

FIG.5 (A) illustrates details of present invention on boot fitting portion. There are a pair of annular grooves 41, 41 and an annular lip 42 between the annular grooves 41, 41 on inner surface 40 of fitting portion of the boot 33. The annular lip 42 is formed so that the top end of the lip is not projected from the inner surface 40 to centerline of the boot 33. Also, the annular lip 42 is formed so that the annular lip equips small radius top end. An annular protuberance 43 is formed on opposite side of the annular lip on outer surface of the boot 33. The process of tightly fitting of the boot 33 to the rack gear case 34 is, at first, the boot 33 is pushed into the rack gear case 34. At the time, a cylindrical portion 50 of the boot 33 is enlarged by a chamfered surface 45T on the edge of rack gear case 34. Then the enlarged cylindrical portion 50 passes an annular protuberance 45 and tightly fits to an annular groove 47 on outer surface of the rack gear case 34. Since the annular lip 42 with a small radius top end is formed so that the top end of the annular lip is not projected from the inner surface 40 of the fitting portion to centerline of the boot 33, the rack gear case 34 can be inserted into the boot 33 without interference between the annular lip 42 and the edge of the rack gear case 34. Therefore, the top end of the annular lip 42 becomes free from damages due to interference with the edge of the rack gear case 34.

FIG. 5 (B) illustrates status of the boot 33, the rack gear case 34 and clamping means 35 after the boot 33 is fitted into the rack gear case 34 and clamped by the clamping means 35. The annular lip 42 is elastically deformed and is pushed to the outer annular groove 47 on the rack gear case 34 by which clamping force from the clamping means 35 is exerted in concentration to said annular lip 42 through the protuberance 43. Therefore, stable sealing performance is provided.

Furthermore, the technological components described in this specification and illustrated in the drawings can demonstrate their technological usefulness independently through various other combinations which are not limited to the combinations described in the claims made at the time of application. Moreover, the art described in this specification and illustrated in the drawings can simultaneously achieve a plurality of objectives, and is technologically useful by virtue of realizing any one of these objectives.

A boot structure fitting into an axial component (12) to protect from wrong environment including outside dust. Said boot (13) has a pair of annular grooves (21, 21) and an annular lip (22) between said pair of annular grooves (21, 21) on inner surface (20) of said boot (13). Said annular lip (22) is formed so that the annular lip top is not projected from inner surface (20) to centerline of the boot (13). An annular protuberance means (23) between said boot (13) and clamping means (14), through which clamping force from said clamping means (14) is exerted in concentration to said annular lip (22) so that said annular lip (22) is elastically deformed and pushed to outside of said axial component (12).

Therefore, the axial component (12) enables to be inserted into the boot (13) without interference between the annular lip (22) and the axial component (12). Furthermore the annular lip (22) becomes to be free from damage by interference between the annular lip (22) and the axial component (12).

## Claims

1. Combination of a boot and an axial component with which said boot (13) is to be used,
said boot comprising a boot structure fitting for a mechanical joint,
said boot (13) having cylindrical opening on both ends thereof and tightly fitted to said axial component (12) of the mechanical joint at at least one of ends,
said boot (13) is made of flexible materials;
and clamping means (14) clamping said boot (13) to said axial components (12) from outside of said boot (13),
said boot structure fitting for a mechanical joint further comprising;
a pair of annular grooves (21, 21) formed on an inner surface (20) of said boot (13);
an annular lip (22) formed between said pair of annular grooves (21, 21) and annular protuberance means (23) between said boot (13) and said clamping means (14), through which clamping force from said clamping means (14) is exerted in concentration to said annular lip (22) so that said annular lip (22) is elastically deformed and is fit tightly to outside of said axial component (12) ;
**characterized in that**
said annular lip (22) has an inner diameter in such a way that a top end of said annular lip (22) is not projected from the inner surface (20) to centerline of said boot (13) when said boot is in an unclamped state, such that no interference exist between the annular lip and the axial component.

2. The combination according to claim 1,
**characterized in that**
the annular protuberance (23) is formed on outer surface of the boot (13) and is located on opposite side of the annular lip (22), the annular lip (22) is elastically deformed and pushed to outside of the axial component (12) through which clamping force from said clamping means (14) is exerted in concentration to said annular lip (22).

3. The combination according to claim 1,
**characterized in that**
said annular protuberance (60) is prepared on inner surface of the clamping means (14).

4. The combination according to claim 1,
**characterized in that**
an annular groove (15) is prepared on outside of the axial component (12) and the annular lip (22) is elastically deformed and fallen into the annular groove (15) through which clamping force from said clamping means (14) is exerted in concentration to said annular lip (22).

5. The combination according to claim 1,
**characterized in that**
said axial component is an outer housing (12) for a constant velocity joint and/or a driving shaft (11),
wherein said annular protuberance means (23) is formed on an outer surface of said boot (13).

6. The combination according to claim 1,
**characterized in that**
wherein said axial component is an outer housing (12) for a constant velocity joint and/or a driving shaft (11),
wherein said annular protuberance means (60) formed on an inner surface of said clamping means (14).

7. The combination according to one of claims 5 and 6,
**characterized in that**
said axial component is for a constant velocity joint and an annular outer groove (15) is prepared on outer surface on said outer housing (12).

8. The combination according to claim 1
**characterized in that**
said axial component is a rack gear case (34) for a power steering apparatus and/or a tie rod (32),
wherein said annular protuberance means (43) is formed on an outer surface of said boot (33).

9. The combination according to claim 1,
**characterized in that**
said axial component is a rack gear case (34) for a power steering apparatus and/or a tie rod (32),
wherein said annular protuberance means (60) is formed on an inner surface of said clamping means (35).

10. The combination according to one of claims 8 and 9,
**characterized in that**
said axial component (34) is for a power steering apparatus and said outer groove (15) is prepared on outer surface of a rack gear case (34) and/or a tie rod (32).

## Patentansprüche

1. Kombination einer Manschette und einer axialen Komponente, mit der die Manschette (13) zu verwenden ist,
wobei die Manschette einen Manschettenaufbau aufweist, der für eine mechanische Verbindung passt,
die Manschette (13) eine zylindrische Öffnung an deren beiden Enden aufweist und eng an die axiale Komponente (12) der mechanischen Verbindung an wenigstens einem der Enden passt,
die Manschette (13) aus flexiblen Materialien hergestellt ist;
und wobei eine Klemmeinrichtung (14) die Manschette (13) von außerhalb der Manschette (13) an die axialen Komponenten (12) klemmt,
wobei der Manschettenaufbau, der für eine mechanische Verbindung passt, ferner Folgendes aufweist:
ein Paar von ringförmigen Nuten (21, 21), die an einer Innenfläche (20) der Manschette (13) ausgebildet sind;
eine ringförmige Lippe (22), die zwischen dem Paar von ringförmigen Nuten (21, 21) ausgebildet ist und einer ringförmigen Höckereinrichtung (23) zwischen der Manschette (13) und der Klemmeinrichtung (14), durch die eine Klemmkraft von der Klemmeinrichtung (14) in Konzentration auf die ringförmige Lippe (22) ausgeübt ist, so dass die ringförmige Lippe (22) elastisch deformiert ist und fest an eine Außenseite der axialen Komponente (12) passt;
**dadurch gekennzeichnet, dass**
die ringförmige Lippe (22) einen Innendurchmesser in solch einer Art und Weise aufweist, dass ein oberes Ende der ringförmigen Lippe (22) nicht von der Innenfläche (22) vorragt, um die Manschette (13) zu zentrieren, wenn die Manschette in einem ungeklemmten Zustand ist, so dass keine Beeinflussung zwischen der ringförmigen Lippe und der axialen Komponente existiert.

2. Kombination nach Anspruch 1, **dadurch gekennzeichnet, dass** der ringförmige Höcker (23) an einer Außenfläche der Manschette (13) ausgebildet ist und sich an einer gegenüberliegenden Seite der ringförmigen Lippe (22) befindet, wobei die ringförmige Lippe (22) elastisch deformiert ist und zu einer Außenseite der axialen Komponente (12) gedrückt ist, durch die eine Klemmkraft von der Klemmeinrichtung (14) in Konzentration auf die ringförmige Lippe (22) ausgeübt ist.

3. Kombination nach Anspruch 1, **dadurch gekennzeichnet, dass** der ringförmige Höcker (60) an einer Innenfläche der Klemmeinrichtung (14) bereitgestellt ist.

4. Kombination nach Anspruch 1, **dadurch gekennzeichnet, dass** eine ringförmige Nut (15) an einer Außenseite der axialen Komponente (12) bereitgestellt ist und die ringförmige Lippe (22) elastisch deformiert ist und in die ringförmige Nut (15) fällt, durch die eine Klemmkraft von der Klemmeinrichtung (14) in Konzentration auf die ringförmige Lippe (22) ausgeübt ist.

5. Kombination nach Anspruch 1, **dadurch gekennzeichnet, dass** die axiale Komponente ein äußeres Gehäuse (12) für ein Gleichlaufgelenk und/oder eine Antriebswelle (11) ist,
wobei die ringförmige Höckereinrichtung (23) an einer Außenfläche der Manschette (13) ausgebildet ist.

6. Kombination nach Anspruch 1, **dadurch gekennzeichnet, dass**
die axiale Komponente ein äußeres Gehäuse (12) für ein Gleichlaufgelenk und/oder eine Antriebswelle (11) ist,
wobei die ringförmige Höckereinrichtung (60) an einer Innenfläche der Klemmeinrichtung (14) ausgebildet ist.

7. Kombination nach einem der Ansprüche 5 und 6, **dadurch gekennzeichnet, dass**
die axiale Komponente für ein Gleichlaufgelenk ist und eine ringförmige äußere Nut (15) an einer Außenfläche des äußeren Gehäuses (12) bereitgestellt ist.

8. Kombination nach Anspruch 1, **dadurch gekennzeichnet, dass** die axiale Komponente ein Zahnstangengetriebegehäuse (34) für eine Servolenkvorrichtung und/oder eine Spurstange (32) ist,
wobei die ringförmige Höckereinrichtung (43) an einer Außenfläche der Manschette (33) ausgebildet ist.

9. Kombination nach Anspruch 1, **dadurch gekennzeichnet, dass** die axiale Komponente ein Zahnstangengetriebegehäuse (34) für eine Servolenkvorrichtung und/oder eine Spurstange (32) ist,
wobei die ringförmige Höckereinrichtung (60) an einer Innenfläche der Klemmeinrichtung (35) ausgebildet ist.

10. Kombination nach einem der Ansprüche 8 und 9, **dadurch gekennzeichnet, dass** die axiale Komponente (34) für eine Servolenkvorrichtung ist und die äußere Nut (15) an einer Außenfläche eines Zahnstangengetriebegehäuses (34) und/oder einer Spurstange (32) bereitgestellt ist.

## Revendications

1. Combinaison d'un soufflet de protection et d'un composant axial avec lequel ledit soufflet de protection (13) doit être utilisé,
ledit soufflet de protection comportant un raccord de structure de soufflet de protection pour un joint mécanique,
ledit soufflet de protection (13) ayant une ouverture cylindrique à ses deux extrémités et étant ajusté de manière serrée sur ledit composant axial (12) du joint mécanique au niveau d'au moins une des extrémités,
ledit soufflet de protection (13) est fabriqué dans des matières flexibles ;
et des moyens de serrage (14) serrant ledit soufflet de protection (13) sur lesdits composants axiaux (12) depuis l'extérieur dudit soufflet de protection (13),
ledit raccord de structure de soufflet de protection pour un joint mécanique comportant en outre ;
une paire de rainures annulaires (21, 21) formées sur une surface intérieure (20) dudit soufflet de protection (13) ;
une lèvre annulaire (22) formée entre ladite paire de rainures annulaires (21, 21) et des moyens de protubérance annulaires (23) entre ledit soufflet de protection (13) et lesdits moyens de serrage (14), par l'intermédiaire desquels une force de serrage desdits moyens de serrage (14) est exercée en concentration sur ladite lèvre annulaire de (22) de telle sorte que ladite lèvre annulaire (22) est élastiquement déformée et est ajustée de manière serrée sur l'extérieur dudit composant axial (12) ; **caractérisé en ce que**
ladite lèvre annulaire (22) a un diamètre intérieur de telle manière qu'une extrémité supérieure de ladite lèvre annulaire (22) ne dépasse pas de la surface intérieure (20) vers l'axe dudit soufflet de protection (13) quand ledit soufflet de protection est dans un état desserré, de telle sorte qu'aucune interférence n'existe entre la lèvre annulaire et le composant axial.

2. Combinaison selon la revendication 1, **caractérisée en ce que** la protubérance annulaire (23) est formée sur la surface extérieure du soufflet de protection (13) et se trouve sur le côté opposé de la lèvre annulaire (22), la lèvre annulaire (22) est élastiquement déformée et poussée vers l'extérieur du composant axial (12), grâce à quoi une force de serrage desdits moyens de serrage (14) est exercée en concentration sur ladite lèvre annulaire (22).

3. Combinaison selon la revendication 1, **caractérisée en ce que** ladite protubérance annulaire (60) est préparée sur une surface intérieure des moyens de serrage (14).

4. Combinaison selon la revendication 1, **caractérisée en ce que** qu'une rainure annulaire (15) est préparée sur l'extérieur du composant axial (12) et de la lèvre annulaire (22) est élastiquement déformée et tombe dans la rainure annulaire (15) grâce à quoi une force de serrage desdits moyens de serrage (14) est exercée en concentration sur ladite lèvre annulaire (22).

5. Combinaison selon la revendication 1, **caractérisée en ce que** ledit composant axial est un boîtier externe (12) pour un joint homocinétique et/ou un arbre d'entraînement (11), lesdits moyens de protubérance annulaires (23) étant formés sur une surface extérieure dudit soufflet de protection (13).

6. Combinaison selon la revendication 1, **caractérisée en ce que** ledit composant axial est un boîtier externe (12) pour un joint homocinétique et/ou un arbre d'entraînement (11), lesdits moyens de protubérance annulaire (60) étant formés sur une surface intérieure desdits moyens de serrage (14).

7. Combinaison selon une des revendications 5 et 6, **caractérisée en ce que** ledit composant axial est pour un joint homocinétique et une rainure externe annulaire (15) est préparée sur une surface extérieure sur ledit boîtier externe (12).

8. Combinaison selon la revendication 1, **caractérisée en ce que** ledit composant axial est un boîtier de crémaillère (34) pour une direction assistée et/ou une biellette (32), lesdits moyens de protubérance annulaire (43) étant formés sur une surface extérieure dudit soufflet de protection (33).

9. Combinaison selon la revendication 1, **caractérisée en ce que** ledit composant axial est un boîtier de crémaillère (34) pour une direction assistée et/ou une biellette (32), lesdits moyens de protubérance annulaire (60) étant formés sur une surface intérieure desdits moyens de serrage (35).

10. Combinaison selon une des revendications 8 et 9, **caractérisée en ce que** ledit composant axial (34) est pour une direction assistée et ladite rainure externe (15) est préparée sur une surface extérieure d'un boîtier de crémaillère (34) et/ou d'une biellette (32).
